# EUROPEAN PATENT APPLICATION

(11) **EP 4 601 109 A1**
(43) Date of publication of application: **13.08.2025**
(21) Application number: 24868408.6
(22) Date of filing: 30.04.2024
(51) Int. Cl.: H01M 50/531, H01M 10/04, H01M 50/533, H01M 50/534, H01M 4/66

(54) **ELECTRODE ASSEMBLY FOR SECONDARY BATTERY AND BATTERY CELL COMPRISING SAME**

(30) Priority: 19.09.2023 KR 20230124641; 02.02.2024 KR 20240016925
(71) Applicant: LG Energy Solution, Ltd., Seoul 07335 (KR)
(72) Inventor: YOO, Su Yeon, Daejeon 34122 (KR); HONG, Eui Jin, Daejeon 34122 (KR); LEE, Seok Kyeong, Daejeon 34122 (KR); CHO, Woo Hyung, Daejeon 34122 (KR)
(74) Representative: Plasseraud IP
(86) International application number: PCT/KR2024/005844
(87) International publication number: WO 2025/063421

(57) **Abstract**

Disclosed are a secondary battery electrode assembly and a battery cell including the same, and more particularly a secondary battery electrode assembly including at least one first electrode including a first electrode current collector and a first electrode tab extending from the first electrode current collector in one direction, at least one second electrode including a second electrode current collector and a second electrode tab extending the second electrode current collector in one direction, a separator interposed between the first electrode and the second electrode, a first electrode lead electrically connected to the first electrode tab, and a second electrode lead electrically connected to the second electrode tab, wherein the first electrode current collector has a first resin layer interposed between a pair of aluminum layers, and a first metal foil is interposed between the first electrode tab and the first electrode lead on at least a part of a region where the first electrode tab and the first electrode lead overlap each other.

## Description

### [Technical Field]

This application claims the benefit of priority to Korean Patent Application No. 2023-0124641 filed on September 19, 2023 and Korean Patent Application No. 2024-0016925 filed on February 2, 2024, the disclosures of which are incorporated herein by reference in its entireties.

The present invention relates to a secondary battery electrode assembly and a battery cell including the same, and more particularly to a secondary battery electrode assembly having a structure in which electrode tabs, each of which has a resin layer interposed between a pair of metal layers, are firmly connected and fixed to an electrode lead and a battery cell including the same.

### [Background Art]

With technological development of mobile devices and an increase in demand therefor, secondary batteries, which are capable of being charged and discharged, have been used as an energy source for various mobile devices. Secondary batteries have also attracted attention as an energy source for electric vehicles and hybrid electric vehicles presented as alternatives to existing gasoline and diesel vehicles, which use fossil fuels.

Depending on the shape of a battery case, secondary batteries are categorized into a cylindrical battery having an electrode assembly mounted in a cylindrical metal can, a prismatic battery having an electrode assembly mounted in a prismatic metal can, or a pouch-shaped battery having an electrode assembly mounted in a pouch-shaped case made of an aluminum laminate sheet.

Particularly, in the case of a pouch-shaped secondary battery, a plurality of positive electrodes each having a predetermined size and a plurality of negative electrodes each having a predetermined size are sequentially stacked in the state in which a separator is interposed therebetween, and electrode tabs or a pair of electrode leads connected to the electrode tabs protrude from one side or both sides of the battery case.

Meanwhile, an aluminum current collector is generally used as a positive electrode current collector to which a positive electrode active material is applied. Since the aluminum current collector has been pointed out as the main cause of ignition due to various reasons, however, research is underway to replace the aluminum current collector with a composite current collector, such as a current collector having a structure in which a resin layer is interposed between two metal layers.

When such a three-layer current collector is used, it is expected that safety can be improved because the metal layer is thin and has high resistance in the event of short circuit and can quickly cut off the flow of current.

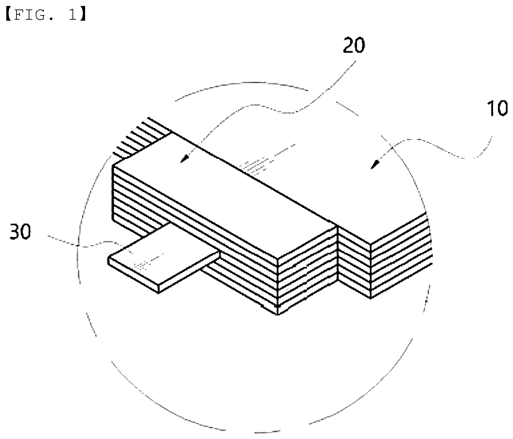

FIG. 1 is a partial schematic view of a conventional secondary battery. As shown in FIG. 1, an electrode assembly 10 has a structure in which a plurality of tabs 20 extends outward and an electrode lead 30 is interposed between the tabs 20 and is fixed to the tabs by welding.

In the case of the three-layer current collector, however, the resin layer is provided in the middle thereof, and therefore it is difficult to couple the electrode tabs to the electrode lead using a conventional welding method.

### (Prior Art Documents)

(Patent Document 1) Korean Patent Application Publication No. 2022-0124358
(Patent Document 2) Korean Patent Application Publication No. 2023-0020177

### [Disclosure]

### [Technical Problem]

The present invention has been made in view of the above problems, and it is an object of the present invention to provide a secondary battery electrode assembly having a structure in which electrode current collectors each having a resin layer interposed between metal layers can be firmly connected to each other and a battery cell including the same.

It is another object of the present invention to provide a secondary battery electrode assembly having a structure in which electrode current collectors each having a resin layer interposed between metal layers can be firmly connected to an electrode lead and a battery cell including the same.

### [Technical Solution]

A secondary battery electrode assembly according to the present invention to accomplish the above objects includes at least one first electrode including a first electrode current collector and a first electrode tab extending from the first electrode current collector in one direction, at least one second electrode including a second electrode current collector and a second electrode tab extending the second electrode current collector in one direction, a separator interposed between the first electrode and the second electrode, a first electrode lead electrically connected to the first electrode tab, and a second electrode lead electrically connected to the second electrode tab, wherein the first electrode current collector has a first resin layer interposed between a pair of aluminum layers, and a first metal foil is interposed between the first electrode tab and the first electrode lead on at least a part of a region where the first electrode tab and the first electrode lead overlap each other.

Also, in the secondary battery electrode assembly according to the present invention, the first electrode tab may be provided therein with at least two first incision lines formed in a longitudinal direction while being spaced apart from each other by a predetermined distance, and the first metal foil may extend through the at least two first incision lines, whereby both ends of the first metal foil may be exposed on one surface of the first electrode tab while a middle part of the first metal foil may be exposed on the other surface of the first electrode tab.

Also, in the secondary battery electrode assembly according to the present invention, the first electrode may be provided in a plurality of first electrodes, and one first metal foil may extend through first incision lines of first electrode tabs.

Also, in the secondary battery electrode assembly according to the present invention, each of the first electrode and the first metal foil may be provided in plural while the number of the first electrodes and the number of the first metal foils are equal to each other, and one first metal foil may extend through the first incision lines of one first electrode tab.

Also, in the secondary battery electrode assembly according to the present invention, in a width direction, the width of the first metal foil may be greater than the width of the first electrode tab.

Also, in the secondary battery electrode assembly according to the present invention, the first electrode lead may be located in tight contact with one surface of the first electrode tab on which both ends of the first metal foil are exposed.

Also, in the secondary battery electrode assembly according to the present invention, the first metal foil may include aluminum.

Also, in the secondary battery electrode assembly according to the present invention, the first electrode tab, the first electrode lead, and the first metal foil may be fixed to each other by ultrasonic welding.

Also, in the secondary battery electrode assembly according to the present invention, the first resin layer may be made of polyethylene terephthalate (PET).

Also, in the secondary battery electrode assembly according to the present invention, the second electrode current collector may have a second resin layer interposed between a pair of copper layers, and a second metal foil may be interposed between the second electrode tab and the second electrode lead on at least a part of a region where the second electrode tab and the second electrode lead overlap each other.

Also, in the secondary battery electrode assembly according to the present invention, the second electrode tab may be provided therein with at least two second incision lines formed in the longitudinal direction while being spaced apart from each other by a predetermined distance, and the second metal foil may extend through the second incision lines, whereby both ends of the second metal foil may be exposed on one surface of the second electrode tab while a middle part of the second metal foil may be exposed on the other surface of the second electrode tab.

Also, in the secondary battery electrode assembly according to the present invention, the second electrode may be provided in a plurality of second electrodes, and one second metal foil may extend through second incision lines of second electrode tabs.

Also, in the secondary battery electrode assembly according to the present invention, each of the second electrode and the second metal foil may be provided in plural while the number of the second electrodes and the number of the second metal foils may be equal to each other, and one second metal foil may extend through the second incision lines of one second electrode tab.

Also, in the secondary battery electrode assembly according to the present invention, in the width direction, the width of the second metal foil may be greater than the width of the second electrode tab.

Also, in the secondary battery electrode assembly according to the present invention, the second electrode lead may be located in tight contact with one surface of the second electrode tab on which both ends of the second metal foil are exposed.

Also, in the secondary battery electrode assembly according to the present invention, the second metal foil may include copper, nickel-coated copper, or a nickel-copper alloy.

Also, in the secondary battery electrode assembly according to the present invention, the second electrode tab, the second electrode lead, and the second metal foil may be fixed to each other by ultrasonic welding.

Also, in the secondary battery electrode assembly according to the present invention, the second resin layer may be made of polyethylene terephthalate (PET).

In addition, the present invention provides a battery cell including the secondary battery electrode assembly.

In addition, the present invention provides a battery module including the battery cell.

### [Advantageous Effects]

A secondary battery electrode assembly according to the present invention and a battery cell including the same have the advantage that a metal foil extends through an incision line of an electrode tab in a zigzag shape to form a ribbon shape, whereby electrode tabs may be firmly fixed to each other.

In addition, the secondary battery electrode assembly according to the present invention and the battery cell including the same have the merit that ultrasonic welding is performed in the state in which the ribbon-shaped metal foil, the electrode tabs, and an electrode lead are in tight contact with each other, whereby the electrode tabs, the metal foil, and the electrode lead may be firmly fixed to each other.

### [Description of Drawings]

FIG. 1 is a partial schematic view of a conventional secondary battery.
FIG. 2 is an exploded perspective view of a secondary battery electrode assembly according to a first embodiment of the present invention.
FIG. 3 is a perspective view illustrating a method of fastening a first electrode tab, a first metal foil, and a first electrode lead in the electrode assembly shown in FIG. 2.
FIG. 4 is a sectional view of a first electrode in the secondary battery electrode assembly according to the first embodiment of the present invention.
FIG. 5 is a top view of the secondary battery electrode assembly according to the first embodiment of the present invention.
FIG. 6 is a bottom view of the secondary battery electrode assembly according to the first embodiment of the present invention.
FIG. 7 is an exploded perspective view of a secondary battery electrode assembly according to a second embodiment of the present invention.
FIG. 8 is a front view of the secondary battery electrode assembly according to the second embodiment of the present invention.
FIG. 9 is a front view of a secondary battery electrode assembly according to a third embodiment of the present invention.
FIG. 10 is an exploded perspective view of a secondary battery electrode assembly according to a fourth embodiment of the present invention.
FIG. 11 is a perspective view illustrating a method of fastening a second electrode tab, a second metal foil, and a second electrode lead in the electrode assembly shown in FIG. 10.
FIG. 12 is a sectional view of a second electrode in the secondary battery electrode assembly according to the fourth embodiment of the present invention.
FIG. 13 is a top view of the secondary battery electrode assembly according to the fourth embodiment of the present invention.
FIG. 14 is a bottom view of the secondary battery electrode assembly according to the fourth embodiment of the present invention.

### [Best Mode]

In the present application, it should be understood that the terms "comprises," "has," "includes," etc. specify the presence of stated features, numbers, steps, operations, elements, components, or combinations thereof, but do not preclude the presence or addition of one or more other features, numbers, steps, operations, elements, components, or combinations thereof.

In addition, the same reference numbers will be used throughout the drawings to refer to parts that perform similar functions or operations. In the case in which one part is said to be connected to another part throughout the specification, not only may the one part be directly connected to the other part, but also, the one part may be indirectly connected to the other part via a further part. In addition, that a certain element is included does not mean that other elements are excluded, but means that such elements may be further included unless mentioned otherwise.

Hereinafter, a secondary battery electrode assembly according to the present invention and a battery cell including the same will be described with reference to the accompanying drawings.

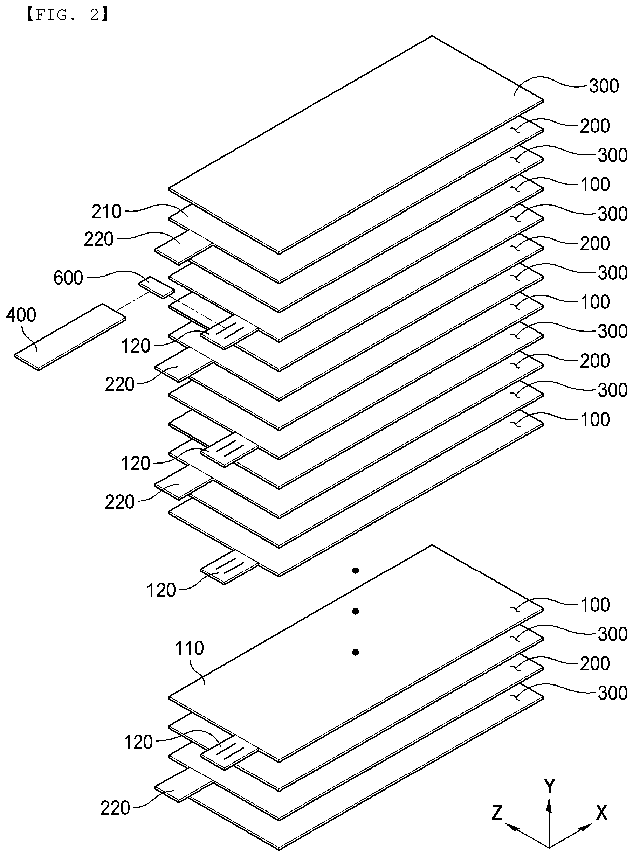

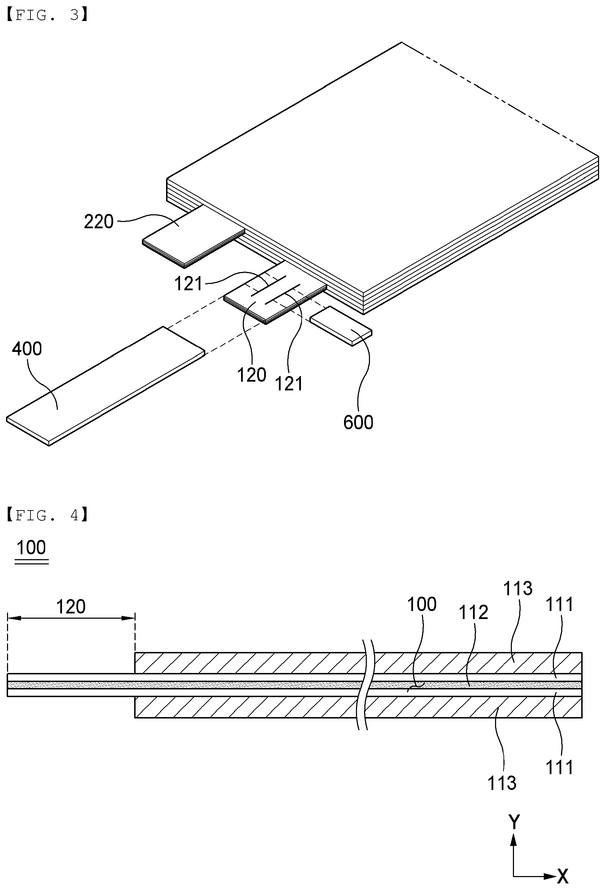

FIG. 2 is an exploded perspective view of a secondary battery electrode assembly according to a first embodiment of the present invention, FIG. 3 is a perspective view illustrating a method of fastening a first electrode tab, a first metal foil, and a first electrode lead in the electrode assembly shown in FIG. 2, and FIG. 4 is a sectional view of a first electrode in the secondary battery electrode assembly according to the first embodiment of the present invention.

As shown in FIGs. 2 to 4, the secondary battery electrode assembly according to the present invention has a structure in which at least one first electrode 100, at least one second electrode 200, and at least one separator 300 are stacked.

Here, the first electrode 100 may be a positive electrode, and the second electrode 200 may be a negative electrode. The separator 300 may be located between the first electrode 100 and the second electrode 200, on the uppermost second electrode 200, and under the lowermost second electrode 200; however, the present invention is not necessarily limited thereto.

In addition, a first electrode lead 400 is electrically connected to the first electrode 100, and a second electrode lead 500 is electrically connected to the second electrode 200. In particular, a first metal foil 600 is interposed between the first electrode 100 and the first electrode lead 400, which will be described in detail later.

First, the first electrode 100 may include a first electrode current collector 110 and a first electrode tab 120. In the first preferred embodiment of the present invention, the first electrode current collector 110 has a three-layer structure in which a first resin layer 112 is interposed between a pair of aluminum layers 111.

Here, each of the aluminum layers has a thickness of about 0.5 to 2 µm, and the first resin layer is made of polyethylene terephthalate (PET) and has a thickness of about 5 to 10 µm; however, the present invention is not necessarily limited thereto.

In addition, stainless steel, nickel, titanium, sintered carbon, or aluminum or stainless steel whose surface is treated with carbon, nickel, titanium, or silver may be used in place of aluminum as long as the material exhibits high conductivity while the material does not induce any chemical change in a battery. Furthermore, in order to increase adhesion of a first electrode active material, the aluminum layer may have a micro-scale uneven pattern formed on the surface thereof or may be configured in any of various forms, such as a film, a sheet, a foil, a net, a porous body, a foam body, and a non-woven fabric body.

A first electrode active material layer 113 is provided on each of an upper surface and a lower surface of the pair of aluminum layers 111 exposed to the outside.

A layered compound, such as a lithium cobalt oxide (LiCoO₂) or a lithium nickel oxide (LiNiO₂), or a compound substituted with one or more transition metals; a lithium manganese oxide represented by the chemical formula Li₁₊ₓMn₂₋ₓO₄ (where x = 0 to 0.33) or a lithium manganese oxide, such as LiMnO₃, LiMn₂O₃, or LiMnO₂; a lithium copper oxide (Li₂CuO₂); a vanadium oxide, such as LiV₃O₈, V₂O₅, or Cu₂V₂O₇; a Ni-sited lithium nickel oxide represented by the chemical formula LiNi₁₋ₓMₓO₂ (where M = Co, Mn, Al, Cu, Fe, Mg, B, or Ga, and x = 0.01 to 0.3); a lithium manganese composite oxide represented by the chemical formula LiMn₂₋ₓMₓO₂ (where M = Co, Ni, Fe, Cr, Zn, or Ta, and x = 0.01 to 0.1) or the chemical formula Li₂Mn₃MO₈ (where M = Fe, Co, Ni, Cu, or Zn); LiMn₂O₄ in which a part of Li in the chemical formula is replaced by alkaline earth metal ions; a disulfide compound; Fe₂ (MoO₄)₃; or LiNiₓMn₂₋ₓO₄ (0.01 ≤ x ≤ 0.6) may be used as the first electrode active material.

Meanwhile, the first electrode active material may be mixed with a conductive agent and a binder, and a filler may be further added as needed.

The conductive agent is generally added in an amount of 1 to 50 wt% based on the total weight of the mixture including the first electrode active material. The conductive agent is particularly limited as long as the conductive agent exhibits high conductivity while the conductive agent does not induce any chemical change in a battery to which the conductive agent is applied. For example, graphite, such as natural graphite or artificial graphite; carbon black, such as carbon black, acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used as the conductive agent.

The binder is a component assisting in binding between the first electrode active material and the conductive agent and in binding with the current collector. The binder is generally added in an amount of 1 to 50 weight% based on the total weight of the mixture including the first electrode active material. As examples of the binder, there may be used polyvinylidene fluoride, polyvinyl alcohol, carboxymethylcellulose (CMC), starch, hydroxypropylcellulose, regenerated cellulose, polyvinyl pyrrolidone, tetrafluoroethylene, polyethylene, polypropylene, ethylene-propylene-diene terpolymer (EPDM), sulfonated EPDM, styrene butadiene rubber, fluoro rubber, and various copolymers.

Meanwhile, an uncoated portion (not shown), on which the first electrode active material layer is not formed, of the first electrode current collector 110 is punched in a predetermined shape to form the first electrode tab 120.

The second electrode 200 may include a second electrode current collector 210 and a second electrode tab 220. The second electrode current collector 210 is generally manufactured so as to have a thickness of 3 to 500 µm. The second electrode current collector is not particularly restricted as long as the second electrode current collector exhibits high conductivity while the second electrode current collector does not induce any chemical change in a battery. For example, the second electrode current collector may be made of copper, stainless steel, aluminum, nickel, titanium, or sintered carbon. Alternatively, the second electrode current collector may be made of copper or stainless steel, the surface of which is treated with carbon, nickel, titanium, or silver, or an aluminum-cadmium alloy.

In addition, the second electrode current collector may have a micro-scale uneven pattern formed on the surface thereof in order to increase adhesion of a second electrode active material, or may be configured in any of various forms, such as a film, a sheet, a foil, a net, a porous body, a foam body, and a non-woven fabric body.

A second electrode active material layer is provided on each of an upper surface and a lower surface of the second electrode current collector 210. As the second electrode active material, for example, there may be used carbon, such as non-graphitizing carbon or graphite-based carbon; a metal composite oxide, such as LiₓFe₂O₃ (0≤x≤1) , LiₓWO₂ (0≤x≤1), SnₓMe₁₋ₓMe' _{y}O_{z} (Me: Mn, Fe, Pb, Ge; Me': Al, B, P, Si, Group 1, 2, and 3 elements of the periodic table, halogen; 0<x≤1; 1≤y≤3; 1≤z≤8); lithium metal; a lithium alloy; a silicon-based alloy; a tin-based alloy; a metal oxide, such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, or Bi₂O₅; a conductive polymer, such as polyacetylene; a Li-Co-Ni-based material, or a Si-based material, such as Si, SiO, SiO₂, or a mixture thereof; however, the present invention is not limited thereto.

Of course, the second electrode active material may be further mixed with a conductive agent and a binder to form the second electrode active material layer.

The conductive agent is a component configured to further improve conductivity of the second electrode active material, and carbon black, such as acetylene black, Ketjen black, channel black, furnace black, lamp black, or thermal black; conductive fiber, such as carbon fiber or metallic fiber; metallic powder, such as carbon fluoride powder, aluminum powder, or nickel powder; conductive whisker, such as zinc oxide or potassium titanate; a conductive metal oxide, such as titanium oxide; or a conductive material, such as a polyphenylene derivative, may be used in a certain proportion.

The binder is a component assisting in binding between the second electrode active material and the conductive agent and in binding with the current collector, and may include at least one selected from the group consisting of styrene butadiene rubber (SBR), acrylonitrile butadiene rubber, acrylic rubber, butyl rubber, fluoro rubber, polyvinyl alcohol, carboxymethyl cellulose (CMC), starch, hydroxypropyl cellulose, regenerated cellulose, polyvinyl alcohol (PVA), polyacrylic acid (PAA), polyethylene glycol (PEG), polyacrylonitrile (PAN), and polyacrylamide (PAM).

Meanwhile, an uncoated portion (not shown), on which the second electrode active material layer is not formed, of the second electrode current collector 210 is punched in a predetermined shape to form the second electrode tab 220.

The separator 300 prevents short circuit between the first electrode 100 and the second electrode 200 and allows only migration of lithium ions. It is preferable for the separator to be made of any one selected from among polyethylene, polypropylene, a dual layer of polyethylene/polypropylene, a triple layer of polyethylene/polypropylene/polyethylene, a triple layer of polypropylene/polyethylene/polypropylene, and organic fiber filter paper; however, the present invention is not limited thereto.

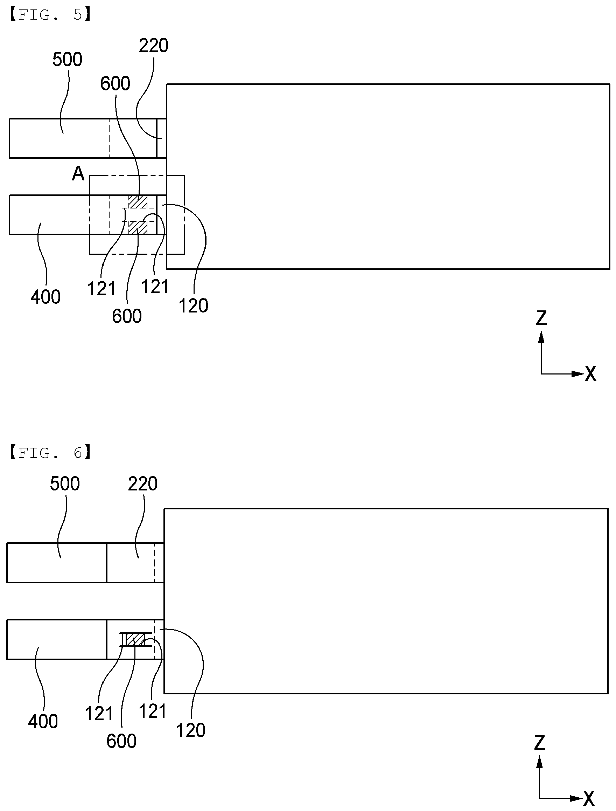

FIG. 5 is a top view of the secondary battery electrode assembly according to the first embodiment of the present invention, and FIG. 6 is a bottom view of the secondary battery electrode assembly according to the first embodiment of the present invention.

The electrical connection structure between the first electrode tabs 120, the first electrode lead 400, and the first metal foil 600 will be described with reference to FIGs. 2 to 6.

In general, the first electrode tab is made of only a metal and may be coupled to the first electrode lead by ultrasonic welding or the like. However, as described above, each of the first electrode current collector and the first electrode tab according to the first embodiment of the present invention has a structure in which the first resin layer is interposed between the pair of aluminum layers. That is, due to the first resin layer 112 located in the middle of the first electrode tab 120 in a thickness direction (y-axis direction), it is difficult to firmly fix a plurality of first electrode tabs 120 to the first electrode lead 400 by ultrasonic welding, and it is also difficult to electrically connect each of the first electrode tabs 120 to the first electrode lead 400.

In the first embodiment of the present invention, therefore, a first incision line 121 is formed in each of the first electrode tabs 120 in a longitudinal direction (x-axis direction), and the first metal foil 600 is disposed so as to extend through the first incision line 121.

More specifically, two first incision lines 121 are provided in each of the first electrode tabs 120 in the longitudinal direction (x-axis direction) so as to be parallel to each other in a state of being spaced apart from each other by a predetermined distance.

Preferably, both ends of the first incision line 121 are located in the first electrode tab 120 in order to prevent separation of the first metal foil 600 extending through the first incision line 121.

When the first metal foil 600 extends through any one of the two first incision lines 121 and then extends through the other first incision line 121, the first metal foil 600 is exposed on both edges of the first electrode tab 120 in the width direction (z-axis direction) (see FIG. 5).

In contrast, on the back surface of the first electrode tab 120, both edges of the first metal foil 600 in the width direction (z-axis direction) are not exposed but the middle part of the first metal foil is exposed (see FIG. 6).

As a result, the first metal foil 600 is shaped like a ribbon that extends through the two first incision lines 121 in a zigzag shape, whereby the first electrode tabs 120 form a tab bundle by the first metal foil 600.

The first electrode lead 400 is brought into tight contact with a part of the first electrode tab 120 and a part of the first metal foil 600, and is fixed thereto by ultrasonic welding.

At this time, the first electrode lead 400 preferably faces the exposed surfaces of the first metal foil 600 on both edges of the first electrode tab 120 in the width direction (z-axis direction). The reason for this is that, when the first electrode lead 400 is coupled and fixed to both edges of the first electrode tab 120 in the width direction (z-axis direction), it is possible to more effectively inhibit the movement of the first electrode lead in the width direction (z-axis direction) .

Of course, since the first metal foil 600 extends through the side surfaces of the first electrode tabs 120, i.e., the first incision lines 121, the first electrode tabs 120, the first metal foil 600, and the first electrode lead 400 are electrically connected to each other.

Preferably, the width of the first metal foil 600 (in the z-axis direction) is not greater than the width of the first electrode tab 120, and more preferably, the length of the first metal foil 600 (in the x-axis direction) is slightly less than the length of the first incision line 121.

Meanwhile, the first metal foil 600 is preferably made of the same material as the aluminum layer 111, i.e., aluminum, but the material may be changed if the first metal foil can perform the same function, and the first electrode lead 400 is preferably made of aluminum; however, the present invention is not necessarily limited thereto.

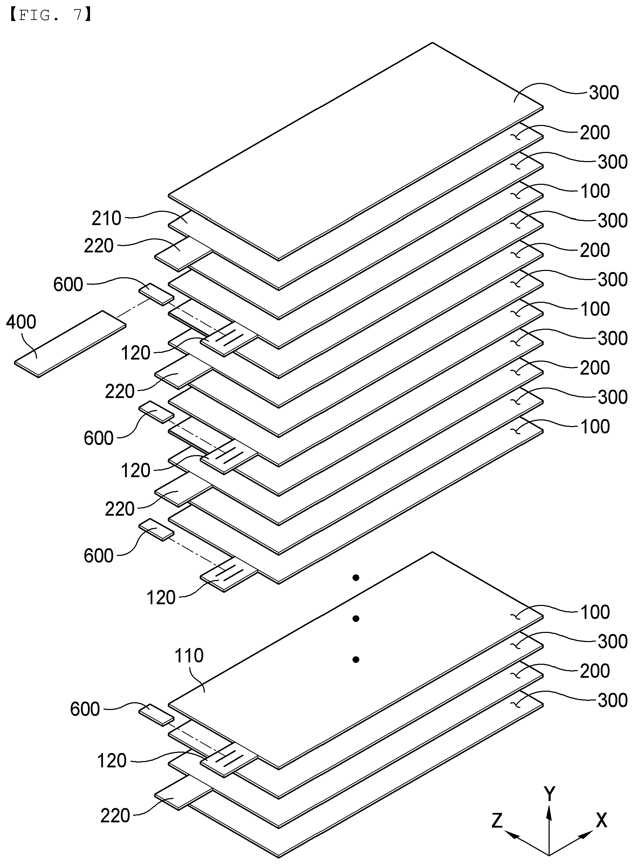

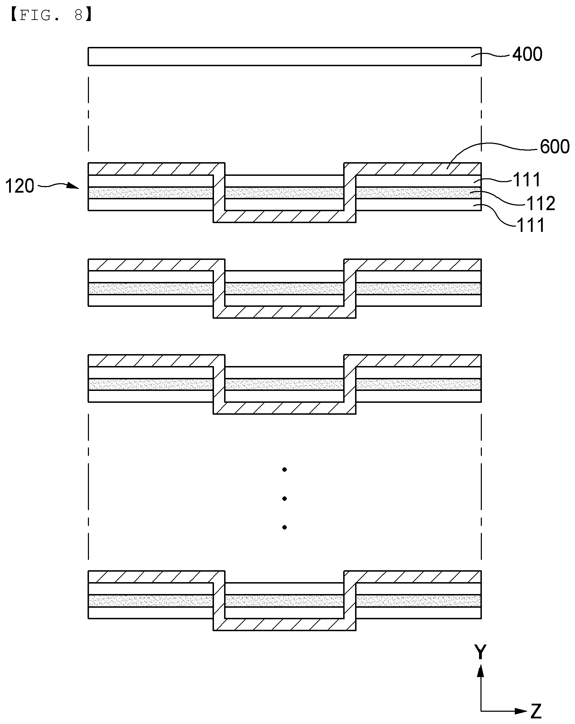

FIG. 7 is an exploded perspective view of a secondary battery electrode assembly according to a second embodiment of the present invention, and FIG. 8 is a front view of the secondary battery electrode assembly according to the second embodiment of the present invention.

In the first embodiment, a plurality of first electrode tabs is stacked and a single first metal foil extends through first incision lines of the first electrode tabs, whereas in the second embodiment, a plurality of first electrodes and a plurality of first metal foils are provided, wherein the number of the first electrodes and the number of the first metal foils are equal, and one first metal foil extends through first incision lines of one first electrode tab.

In the second embodiment, predetermined parts of the first metal foils 600 are in tight contact with each other, and the contact area between the first electrode tab 120 and the first metal foil 600 is increased, whereby the resistance may be maintained low.

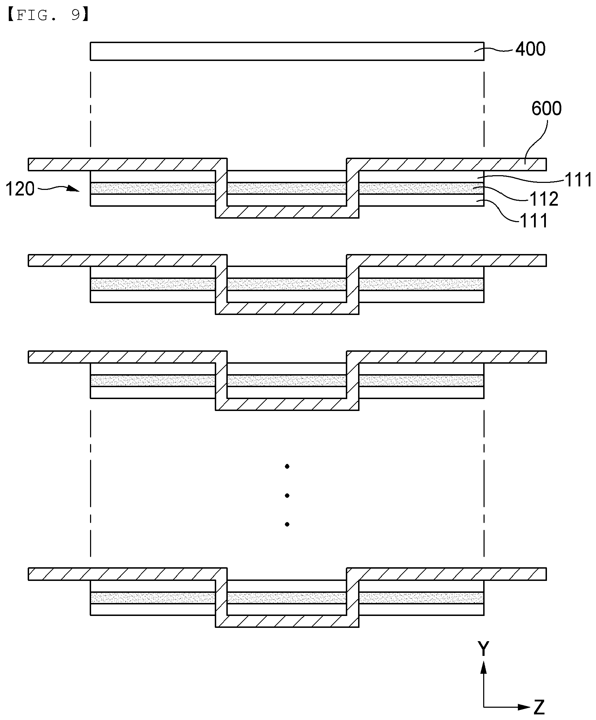

FIG. 9 is a front view of a secondary battery electrode assembly according to a third embodiment of the present invention. The third embodiment is identical to the second embodiment except that the width of the first metal foil 600 (in the z-axis direction) is greater than the width of the first electrode tab 120.

In the third embodiment, at least one of opposite edges of the first metal foil 600 protrudes outward from the edge of the first electrode tab 120, whereby the first metal foils 600 may be more firmly fixed. In other words, since no first resin layer 112 is located between the parts of the first metal foils 600 extending outward from the edge of the first electrode tab 120, the first metal foils 600 are securely coupled by ultrasonic welding.

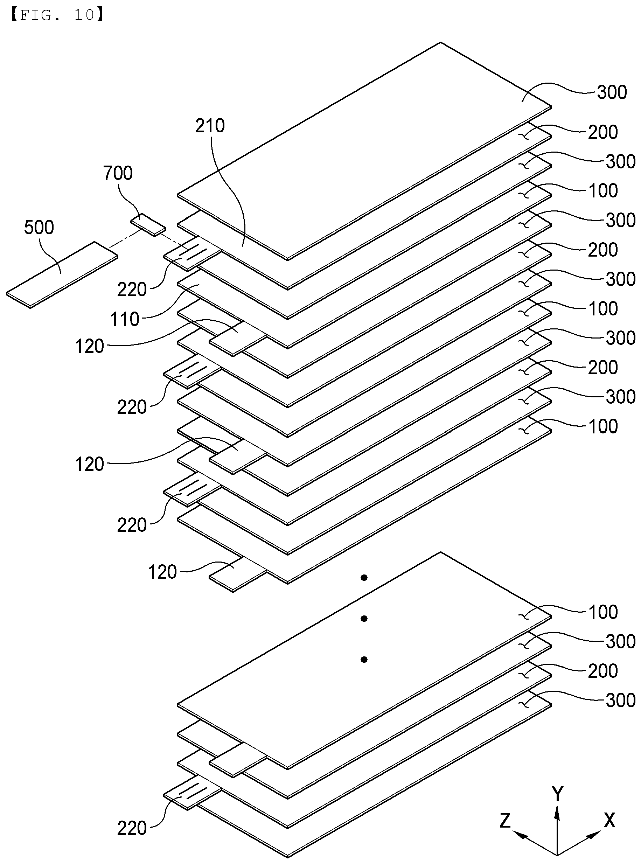

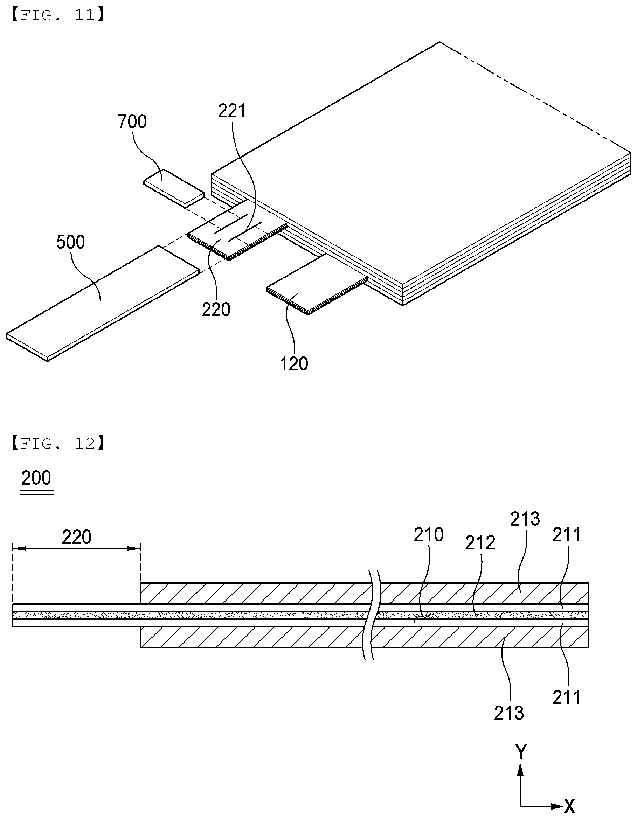

FIG. 10 is an exploded perspective view of a secondary battery electrode assembly according to a fourth embodiment of the present invention, FIG. 11 is a perspective view illustrating a method of fastening a second electrode tab, a second metal foil, and a second electrode lead in the electrode assembly shown in FIG. 10, and FIG. 12 is a sectional view of a second electrode in the secondary battery electrode assembly according to the fourth embodiment of the present invention.

In the same manner as the first embodiment, the secondary battery electrode assembly according to the fourth embodiment of the present invention has a structure in which at least one first electrode 100, at least one second electrode 200, and at least one separator 300 are stacked.

In the second embodiment, however, the second electrode 200 has a three-layer structure, and a second metal foil 700 is interposed between the second electrode 200 and a second electrode lead 500, unlike the first embodiment, and therefore a duplicate description thereof will be omitted and only the different configuration will be described.

The second electrode 200 may include a second electrode current collector 210 and a second electrode tab 220. In the second preferred embodiment of the present invention, the second electrode current collector 210 has a three-layer structure in which a second resin layer 212 is interposed between a pair of copper layers 211.

Here, the copper layer has a thickness of about 0.5 to 2.0 µm, and the second resin layer is made of polyethylene terephthalate (PET) and has a thickness of about 3 to 10 µm; however, the present invention is not necessarily limited thereto.

Of course, stainless steel or the like may be used instead of copper as long as high conductivity can be exhibited without any chemical change being caused in a battery.

A second electrode active material layer 213 is provided on each of an upper surface and a lower surface of the pair of copper layers 211 exposed to the outside. The second electrode active material layer has been previously described, and therefore a description thereof will be omitted.

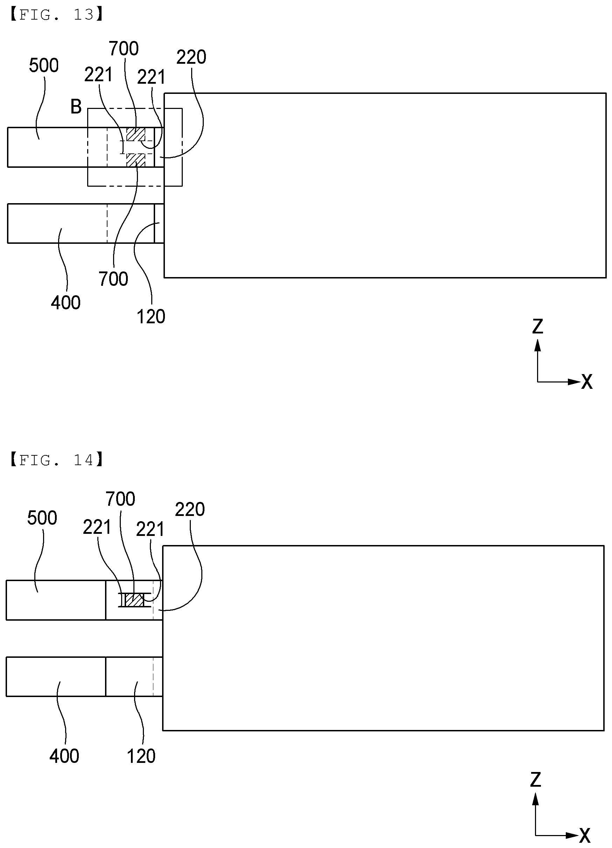

FIG. 13 is a top view of the secondary battery electrode assembly according to the fourth embodiment of the present invention, and FIG. 14 is a bottom view of the secondary battery electrode assembly according to the fourth embodiment of the present invention.

The electrical connection structure between the second electrode tabs 220, the second electrode lead 500, and the second metal foil 700 will be described with reference to FIGs. 10 to 14.

In general, the second electrode tab is made of only a metal and may be coupled to the second electrode lead by ultrasonic welding or the like. However, as described above, each of the second electrode current collector and the second electrode tab according to the fourth embodiment of the present invention has a structure in which the second resin layer is interposed between the pair of copper layers. That is, due to the second resin layer 212 located in the middle of the second electrode tab 220 in the thickness direction (y-axis direction), it is difficult to firmly fix a plurality of second electrode tabs 220 to the second electrode lead 500 by ultrasonic welding, and it is also difficult to electrically connect each of the second electrode tabs 220 to the second electrode lead 500.

In the fourth embodiment of the present invention, therefore, a second incision line 221 is formed in each of the second electrode tabs 220 in the longitudinal direction (x-axis direction), and the second metal foil 700 is disposed so as to extend through the second incision line 221.

More specifically, two second incision lines 221 are provided in each of the second electrode tabs 220 in the longitudinal direction (x-axis direction) so as to be parallel to each other in a state of being spaced apart from each other by a predetermined distance.

Preferably, both ends of the second incision line 221 are located in the second electrode tab 220 in order to prevent separation of the second metal foil 700 extending through the second incision line 221.

When the second metal foil 700 extends through any one of the two second incision lines 221 and then extends through the other second incision line 221, the second metal foil 700 is exposed on both edges of the second electrode tab 220 in the width direction (z-axis direction) (see FIG. 13).

In contrast, on the back surface of the second electrode tab 220, both edges of the second metal foil 700 in the width direction (z-axis direction) are not exposed but the middle part of the second metal foil is exposed (see FIG. 14).

As a result, the second metal foil 700 is shaped like a ribbon that extends through the two second incision lines 221 in a zigzag shape, whereby the second electrode tabs 220 form a tab bundle by the second metal foil 700.

The second electrode lead 500 is brought into tight contact with a part of the second electrode tab 220 and a part of the second metal foil 700, and is fixed thereto by ultrasonic welding.

At this time, the second electrode lead 500 preferably faces the exposed surfaces of the second metal foil 700 on both edges of the second electrode tab 220 in the width direction (z-axis direction). The reason for this is that, when the second electrode lead 500 is coupled and fixed to both edges of the second electrode tab 220 in the width direction (z-axis direction), it is possible to more effectively inhibit the movement of the second electrode lead in the width direction (z-axis direction) .

Of course, since the second metal foil 700 extends through the side surfaces of the second electrode tabs 220, i.e., the second incision lines 221, the second electrode tabs 220, the second metal foil 700, and the second electrode lead 500 are electrically connected to each other.

Preferably, the width of the second metal foil 700 (in the z-axis direction) is not greater than the width of the second electrode tab 220, and more preferably, the length of the second metal foil 700 (in the x-axis direction) is slightly less than the length of the second incision line 221.

Meanwhile, the second metal foil 700 is preferably made of a material identical or similar to the material of the copper layer 211, e.g., copper, nickel-coated copper, or a nickel-copper alloy, but the material may be changed if the second metal foil can perform the same function, and the second electrode lead 500 is preferably made of copper or nickel; however, the present invention is not necessarily limited thereto.

Although not shown in the figures, the second electrode tab, the second electrode lead, and the second metal foil may be connected to each other in the same manner as in the second embodiment or the third embodiments.

In addition, the present invention provides a secondary battery electrode assembly having a combination of the first to fourth embodiments.

In addition, the present invention provides a battery cell including the secondary battery electrode assembly, a battery module or a battery pack including the battery cell, or a battery pack including the battery module.

Although the specific details of the present invention have been described in detail, those skilled in the art will appreciate that the detailed description thereof discloses only preferred embodiments of the present invention and thus does not limit the scope of the present invention. Accordingly, those skilled in the art will appreciate that various changes and modifications are possible, without departing from the category and the technical idea of the present invention, and it will be obvious that such changes and modifications fall within the scope of the appended claims.

### (Description of Reference Numerals)

- 100:: First electrode
- 110:: First electrode current collector
- 111:: Aluminum layer 112: First resin layer
- 113:: First electrode active material layer
- 120:: First electrode tab
- 121:: First incision line
- 200:: Second electrode
- 210:: Second electrode current collector
- 211:: Copper layer 212: Second resin layer
- 213:: Second electrode active material layer
- 220:: Second electrode tab
- 221:: Second incision line
- 300:: Separator
- 400:: First electrode lead
- 500:: Second electrode lead
- 600:: First metal foil
- 700:: Second metal foil

## Claims

1. A secondary battery electrode assembly comprising:
at least one first electrode comprising a first electrode current collector and a first electrode tab extending from the first electrode current collector in one direction;
at least one second electrode comprising a second electrode current collector and a second electrode tab extending the second electrode current collector in one direction;
a separator interposed between the first electrode and the second electrode;
a first electrode lead electrically connected to the first electrode tab; and
a second electrode lead electrically connected to the second electrode tab, wherein
the first electrode current collector has a first resin layer interposed between a pair of aluminum layers, and
a first metal foil is interposed between the first electrode tab and the first electrode lead on at least a part of a region where the first electrode tab and the first electrode lead overlap each other.

2. The secondary battery electrode assembly according to claim 1, wherein
the first electrode tab is provided therein with at least two first incision lines formed in a longitudinal direction while being spaced apart from each other by a predetermined distance, and
the first metal foil extends through the at least two first incision lines, whereby both ends of the first metal foil are exposed on one surface of the first electrode tab while a middle part of the first metal foil is exposed on another surface of the first electrode tab.

3. The secondary battery electrode assembly according to claim 2, wherein
the first electrode is provided in a plurality of first electrodes, and
one first metal foil extends through first incision lines of first electrode tabs.

4. The secondary battery electrode assembly according to claim 2, wherein
each of the first electrode and the first metal foil is provided in plural while the number of the first electrodes and the number of the first metal foils are equal to each other, and
one first metal foil extends through the first incision lines of one first electrode tab.

5. The secondary battery electrode assembly according to claim 4, wherein, in a width direction, a width of the first metal foil is greater than a width of the first electrode tab.

6. The secondary battery electrode assembly according to claim 2, wherein the first electrode lead is located in tight contact with one surface of the first electrode tab on which both ends of the first metal foil are exposed.

7. The secondary battery electrode assembly according to claim 2, wherein the first metal foil comprises aluminum.

8. The secondary battery electrode assembly according to claim 2, wherein the first electrode tab, the first electrode lead, and the first metal foil are fixed to each other by ultrasonic welding.

9. The secondary battery electrode assembly according to claim 2, wherein the first resin layer is made of polyethylene terephthalate (PET).

10. The secondary battery electrode assembly according to claim 1, wherein
the second electrode current collector has a second resin layer interposed between a pair of copper layers, and
a second metal foil is interposed between the second electrode tab and the second electrode lead on at least a part of a region where the second electrode tab and the second electrode lead overlap each other.

11. The secondary battery electrode assembly according to claim 10, wherein
the second electrode tab is provided therein with at least two second incision lines formed in a longitudinal direction while being spaced apart from each other by a predetermined distance, and
the second metal foil extends through the at least two second incision lines, whereby both ends of the second metal foil are exposed on one surface of the second electrode tab while a middle part of the second metal foil is exposed on another surface of the second electrode tab.

12. The secondary battery electrode assembly according to claim 11, wherein
the second electrode is provided in a plurality of second electrodes, and
one second metal foil extends through second incision lines of second electrode tabs.

13. The secondary battery electrode assembly according to claim 11, wherein
each of the second electrode and the second metal foil is provided in plural while the number of the second electrodes and the number of the second metal foils are equal to each other, and
one second metal foil extends through the second incision lines of one second electrode tab.

14. The secondary battery electrode assembly according to claim 13, wherein, in a width direction, a width of the second metal foil is greater than a width of the second electrode tab.

15. The secondary battery electrode assembly according to claim 11, wherein the second electrode lead is located in tight contact with one surface of the second electrode tab on which both ends of the second metal foil are exposed.

16. The secondary battery electrode assembly according to claim 11, wherein the second metal foil comprises copper, nickel-coated copper, or a nickel-copper alloy.

17. The secondary battery electrode assembly according to claim 11, wherein the second electrode tab, the second electrode lead, and the second metal foil are fixed to each other by ultrasonic welding.

18. The secondary battery electrode assembly according to claim 11, wherein the second resin layer is made of polyethylene terephthalate (PET).

19. A battery cell comprising the secondary battery electrode assembly according to any one of claims 1 to 18.

20. A battery module comprising the battery cell according to claim 19.
